# EUROPÄISCHE PATENTSCHRIFT

(11) **EP 2 428 399 B1**
(45) Veröffentlichungstag und Bekanntmachung des Hinweises auf die Patenterteilung: **30.09.2020**
(21) Anmeldenummer: 11005579.5
(22) Anmeldetag: 08.07.2011
(51) Int. Cl.: B60Q 1/24, B60Q 1/22

(54) **Rangierhilfevorrichtung für ein Nutzfahrzeug**
Maneuvering aid device for a commercial vehicle
Dispositif d'aide à la manoeuvre pour un véhicule utilitaire

(30) Priorität: 08.09.2010 DE 102010044658
(43) Veröffentlichungstag der Anmeldung: 14.03.2012
(73) Patentinhaber: MAN Truck & Bus SE, 80995 München (DE)
(72) Erfinder: Schwertberger, Walter, 82278 Althegnenberg (DE); Brummer, Markus, 85301 Schweitenkirchen (DE); Heyes, Daniel, 81247 München (DE); Resch, Christoph, 80637 München (DE)
(74) Vertreter: v. Bezold & Partner Patentanwälte - PartG mbB

(56) Entgegenhaltungen:
- DE-A1- 3 724 943
- DE-A1- 10 306 108
- DE-A1- 19 961 913
- DE-A1-102004 007 782
- DE-A1-102008 005 702
- DE-A1-102009 041 557
- FR-A- 632 406

## Beschreibung

Die Erfindung betrifft eine Rangierhilfevorrichtung für ein Fahrzeug, insbesondere für ein Nutzfahrzeug, umfassend Beleuchtungsmittel bzw. Leuchtmittel, die eingerichtet sind, zumindest einen Fahrzeuguntergrund und/oder eine Fahrzeugkarosserie zumindest teilweise zu beleuchten, und umfassend eine Steuereinrichtung, die eingerichtet ist, die Beleuchtungsmittel bzw. Leuchtmittel zu deren Aktivierung und/oder Deaktivierung zu steuern.

Weiterhin bezieht sich die Erfindung auf ein Verfahren zur Durchführung einer Rangierhilfe für ein Fahrzeug, insbesondere für ein Nutzfahrzeug, bei dem zur Beleuchtung von zumindest einem Fahrzeuguntergrund und/oder einer Fahrzeugkarosserie eingerichtete Beleuchtungsmittel bzw. Leuchtmittel zu deren Aktivierung und/oder Deaktivierung gesteuert werden.

Darüber hinaus betrifft die Erfindung ein Fahrzeug, insbesondere ein Nutzfahrzeug, umfassend eine derartige Rangierhilfevorrichtung.

Ferner bezieht sich die Erfindung auf eine Scheinwerfervorrichtung für ein Fahrzeug mit Beleuchtungsmitteln bzw. Leuchtmitteln, die eingerichtet sind, eine Fahrzeugumgebung und einen Fahrzeuguntergrund und/oder eine Fahrzeugkarosserie zumindest teilweise zu beleuchten.

Eine dem Stand der Technik angehörende gattungsgemäße Rangierhilfevorrichtung sowie ein entsprechendes gattungsgemäßes Verfahren sind beispielsweise aus der Patentschrift DE 41 19 436 C2 bekannt. Die darin beschriebene Rangierhilfevorrichtung ist insbesondere für Nutzfahrzeuge, vorzugsweise für Lastkraftwagen (Lkw), vorgesehen. Der mit dieser Rangierhilfevorrichtung ausgestatte Lkw weist zur Unterstützung eines Rangiermanövers an dessen Beifahrerseite neben herkömmlichen Außenspiegeln bzw. Außenrückspiegeln einen so genannten Anfahrspiegel auf. Anhand dieses Anfahrspiegels wird ermöglicht, dass ein Fahrer des Lkws ein vorgeschriebenes, durch den Anfahrspiegel begrenztes Mindestsichtfeld einsehen kann, welches zumindest teilweise den Fahrzeuguntergrund, insbesondere eine Fahrbahn, sowie den Lkw bzw. die Lkw-Karosserie umfasst. Darüber hinaus umfasst die Rangierhilfevorrichtung gemäß der DE 41 19 436 C2 dem Anfahrspiegel zur Be- bzw. Ausleuchtung des Mindestsichtfelds zugeordnete neben der Fahrzeugstandardbeleuchtung vorgesehene zusätzliche Beleuchtungsmittel, welche in diesem Fall als zusätzliche Scheinwerfer ausgebildet sind. Diese zusätzlichen Scheinwerfer sind neben der vorgenannten Fahrzeugstandardbeleuchtung, welche insbesondere Fahrtlichtscheinwerfer bzw. Abblendlichter umfasst, vorgesehen. Die zusätzlichen Scheinwerfer sind dazu eingerichtet, den Fahrzeuguntergrund bzw. die Fahrbahn zu beleuchten, um das vorgegebene durch den Anfahrspiegel begrenzte Mindestsichtfeld ausreichend auszuleuchten. Die Aktivierung dieser zusätzlichen Scheinwerfer zur Ausleuchtung des Mindestsichtfelds kann beispielsweise an die Aktivierung der Fahrtlichtscheinwerfer bzw. des Abblendlichts gekoppelt sein. Ebenso kann vorgesehen sein, dass die zusätzlichen Scheinwerfer auch unabhängig durch Betätigung des Fahrers über einen entsprechend vorgesehenen Schalter separat aktiviert werden können.

Somit ermöglicht die aus der DE 41 19 436 C2 bekannte Rangierhilfevorrichtung zwar eine Erhöhung der Sicherheit für den Fahrer, indem dem Fahrer des Nutzfahrzeugs auch bei Fahrten unter ungünstigen Licht- und Witterungsbedingungen ein besseres Einsehen des Mindestsichtfeldes ermöglicht wird. Jedoch hängt die Aktivierung bzw. Deaktivierung der zusätzlichen Scheinwerfer ausschließlich von der subjektiven Einschätzung des Fahrers ab. In zumindest einigen und möglicherweise auch kritischen Fahrtsituationen sollte es zumindest nicht ausschließlich dem Fahrer überlassen werden, über die Notwendigkeit der Aktivierung und Deaktivierung des zusätzlichen Scheinwerfers entscheiden zu müssen.

Darüber hinaus ist aus der Offenlegungsschrift DE 10 2004 060 026 A1 eine dem Stand der Technik angehörende Beleuchtungsvorrichtung für ein Fahrzeug bekannt. In diesem Fall ist neben den herkömmlichen Rückfahrscheinwerfern bzw. der herkömmlichen Rückfahrbeleuchtung, die bei Einlegen des Rückwärtsgangs zugeschaltet wird, eine weitere bzw. zusätzliche Rückfahrleuchte vorgesehen. Die Aktivierung bzw. Deaktivierung dieser zusätzlichen Rückfahrleuchte ist ebenso mit dem Einlegen des Rückwärtsgangs des Fahrzeugs koppelt. Insbesondere wird diese zusätzliche Rückfahrleuchte aktiviert, wenn der Rückwärtsgang des Fahrzeugs eingelegt wird. Vorzugsweise ist diese Rückfahrleuchte als Punktstrahler ausgebildet und so angeordnet und ausgerichtet, dass sie gezielt einen seitlich hinter dem Fahrzeug liegenden Raum ausleuchtet. Dadurch ist für den Fahrer eine Erkennung von Fahrbahnmarkierungen und Bordsteinberandungen und sonstigen Hindernissen auch bei schlechter Umgebungsbeleuchtung möglich. Darüber hinaus kann die Aktivierung bzw. Deaktivierung dieser zusätzlichen Rückfahrleuchte auch
von einem vorbestimmten Lenkradeinschlag bzw. Lenkradeinschlagwinkel des Fahrzeugs abhängig sein.

Ferner ist aus der Patentschrift DE 102 48 650 B4 eine Rangierhilfevorrichtung für ein Fahrzeug bekannt, bei dem Beleuchtungsmittel zur Beleuchtung zumindest eines Fahrzeuguntergrunds vorgesehen sind, die bei Einlegen eines Rückwärtsgangs des Fahrzeugs, einer Entriegelung der Türen des Fahrzeugs sowie in Abhängigkeit der Fahrzeuginnenbeleuchtung zugeschaltet werden können. Die Beleuchtungsmittel dieser dem Stand der Technik angehörenden Rangierhilfebeleuchtung können insbesondere in ohnehin am oder im Fahrzeug vorhandenen Leuchteinrichtungen, wie beispielsweise Fahrlicht, Rücklicht, etc., vorgesehen sein oder deren Lichtquelle nutzen

Weiterhin offenbart die Offenlegungsschrift DE 103 06 108 A1, die als nächstliegender Stand der Technik angesehen wird ein Kraftfahrzeug, umfassend mindestens einen rechten und mindestens einen linken Kurvenscheinwerfer, die im vorderen und/oder seitlichen Bereich des Kraftfahrzeugs angeordnet sind, sowie Steuermittel, die bei einem Lenkwinkel größer einem vorgegebenen Winkel oder bei einem erkannten Blinksignal das Einschalten mindestens eines Kurvenscheinwerfers veranlassen können. Dabei umfasst das Kraftfahrzeug ferner Mittel zur Erkennung einer Ausparksituation, die derart mit den Steuermitteln zusammenwirken können, dass die Steuermittel bei einem Lenkwinkel größer dem vorgegebenen Winkel und gleichzeitigem Erkennen einer Ausparksituation zumindest den rechten Kurvenscheinwerfer einschalten.

Der Erfindung liegt somit die Aufgabe zugrunde, die gattungsgemäßen Rangierhilfevorrichtungen sowie Verfahren zur Durchführung einer Rangierhilfe für Fahrzeuge derart weiterzubilden, dass die Sicherheit bei Rangiermanövern durch eine verbesserte Aktivierung und Deaktivierung der Rangierhilfevorrichtung erhöht wird.

Diese Aufgabe wird durch die jeweiligen Gegenstände mit den Merkmalen der entsprechenden unabhängigen Ansprüche gelöst.

Vorteilhafte Ausgestaltungen und Weiterbildungen der Erfindung ergeben sich aus den abhängigen Ansprüchen.

Die erfindungsgemäße Rangierhilfevorrichtung baut auf dem gattungsgemäßen Stand der Technik dadurch auf, dass die Steuereinrichtung eingerichtet ist, die Beleuchtungsmittel wenigstens in Abhängigkeit von einer Fahrzeuggeschwindigkeit und/oder einer Fahrzeugbeschleunigung und/oder eines Abstands des Fahrzeugs gegenüber einer Fahrbahnbegrenzung oder einem Fahrbahnhindernis zu steuern. Die erfindungsgemäße Rangierhilfevorrichtung umfasst demnach als Rangierhilfebeleuchtung ausgebildete Beleuchtungsmittel, deren Aktivierung und Deaktivierung nicht unmittelbar von einer Betätigung des Fahrers und somit dessen subjektiver Einschätzung der Fahrsituation abhängt. Stattdessen wird die Rangierhilfebeleuchtung zumindest in einigen Fällen, bei denen von einem Rangiermanöver ausgegangen wird, automatisch aktiviert, um ein entsprechendes Mindestsichtfeld bzw. Beleuchtungsfeld auszuleuchten. Die erfindungsgemäße Rangierhilfevorrichtung nimmt die Aktivierung sowie Deaktivierung zumindest teilweise in Abhängigkeit von Umgebungsbedingungen des Fahrzeugs sowie des Fahrverhaltens des Fahrzeugs vor. So wird wenigstens die Fahrzeuggeschwindigkeit bei der Aktivierung oder Deaktivierung der Beleuchtungsmittel berücksichtigt. Gemäß der Erfindung wird auf ein Rangiermanöver des Fahrzeugs geschlossen, wenn das Fahrzeug über eine bestimmte Zeitdauer bzw. Zeitspanne eine relativ niedrige Fahrzeuggeschwindigkeit aufweist. In diesem Fall steuert die Steuereinrichtung die Beleuchtungsmittel zu deren Aktivierung an. Im anderen Fall, bei dem das Fahrzeug beispielsweise eine relativ hohe Fahrzeuggeschwindigkeit über eine bestimmte Zeitdauer bzw. Zeitspanne aufweist, schließt die Steuereinrichtung hingegen auf eine normale Fahrt des Fahrzeugs und Deaktiviert die Beleuchtungsmittel bzw. behält den deaktivierten Zustand der Beleuchtungsmittel bei. Es ist aber auch denkbar, dass die Beleuchtungsmittel gerade bei einer sehr niedrigen Fahrzeuggeschwindigkeit nicht durch die Steuereinrichtung aktiviert werden; beispielsweise schließt die Steuereinrichtung im Falle eines andauernden Stillstandes des Fahrzeugs, z. B. aufgrund einer Rotphase einer Ampel, gerade nicht auf ein Rangiermanöver des Fahrzeugs und verhindert somit eine Aktivierung der Beleuchtungsmittel.

Sinngemäß gelten die obigen Ausführungen im Zusammenhang mit Berücksichtigung der Fahrzeuggeschwindigkeit auch im Hinblick auf die Berücksichtigung der Fahrzeugbeschleunigung. Vorzugsweise schließt die Steuereinrichtung bei äußerst niedrigen Fahrzeugbeschleunigungen auf ein Rangiermanöver des Fahrzeugs; insbesondere dann, wenn sich die Richtung der Beschleunigung, beispielsweise durch Richtungsänderung oder -umkehr, über eine bestimmte Zeitspanne relativ häufig ändert.

Besonders bevorzugt ist dabei die Berücksichtigung von sowohl der Fahrzeuggeschwindigkeit als auch der Fahrzeugbeschleunigung, wodurch sich noch zuverlässigere Rückschlüsse auf ein Rangiermanöver des Fahrzeugs ziehen lassen. Zur Erfassung der Fahrzeuggeschwindigkeit sowie der Fahrzeugbeschleunigung können beispielsweise dem Fachmann bekannte Sensoren, die entweder zusätzlich am Fahrzeug installiert sind oder ohnehin bereits im Fahrzeug vorhanden sind, verwendet werden. Beispielsweise kann zur Erfassung der Fahrzeuggeschwindigkeit ein dem Fachmann bekannter Geschwindigkeitssensor und zur Erfassung der Fahrzeugbeschleunigung ein dem Fachmann bekannter Beschleunigungssensor verwendet werden.

Darüber hinaus werden erfindungsgemäß auch Abstände des Fahrzeugs gegenüber einer oder mehreren Fahrbahnmarkierungen oder eines oder mehrere Fahrbahnhindernisse bei der Beurteilung, ob die Beleuchtungsmittel aktiviert oder deaktiviert werden sollen, berücksichtigt. Vorzugsweise wird bei der Beurteilung, ob die Beleuchtungsmittel zu aktivieren sind, neben der Berücksichtigung des Abstands des Fahrzeugs gegenüber einer Fahrbahnmarkierung oder eines Fahrbahnhindernisses zusätzlich die Fahrzeuggeschwindigkeit und vorzugsweise auch die Fahrzeugbeschleunigung mit herangezogen. Beispielsweise kann die Steuereinrichtung bei ausreichend niedriger Fahrzeuggeschwindigkeit sowie vorzugsweise entsprechender Fahrzeugbeschleunigung und relativ niedrigem Abstand des Fahrzeugs gegenüber einer Fahrbahnmarkierung oder einem Fahrbahnhindernis auf ein Rangiermanöver des Fahrzeugs schließen. Fahrbahnbegrenzungen können insbesondere Fahrbahnmarkierungen wie beispielsweise Straßenmarkierungen oder Bodenmarkierungen sein, die eine farbliche Kennzeichnung auf der Oberfläche von Verkehrsflächen des Straßenverkehrs darstellen. Ferner können Fahrbahnbegrenzungen aber auch Fahrbahnleiteinrichtungen sein; insbesondere Leitpfosten oder Leitpflöcke, welche Verkehrseinrichtungen darstellen, die der besseren Abgrenzung und dem Verlauf der Fahrbahn dienen. Darüber hinaus können Fahrbahnbegrenzungen insbesondere durch Schutzplanken oder Leitplanken ausgebildet werden. Fahrbahnhindernisse können hingegen jegliche Hindernisse darstellen, beispielsweise parkende Fahrzeuge, Verkehrsschilder, Ampelanlagen, Hydranten etc. Vorzugsweise wird der Abstand gegenüber den Fahrbahnbegrenzungen oder den Fahrbahnhindernissen durch dem Fachmann bekannte Abstandssensoren, wie beispielsweise Radarsensoren etc., ermittelt, wobei vorzugsweise zusätzlich ein Fotosensor verwendet wird, um die entsprechenden Fahrbahnmarkierungen bzw. Fahrbahnhindernisse bei Bedarf zu identifizieren und von anderen erfassten nicht näher interessierenden Objekten zu unterscheiden; beispielsweise ist denkbar, dass Fotosensoren Farbahnmarkierungen feststellen und Abstandsensoren bei vorliegenden Fahrbahnmarkierungen den entsprechenden Abstand ermitteln; beispielsweise kann vorgesehen sein, dass anhand des Abstandssensors ein in einer Parallelebene zum Fahrzeuguntergrund liegender Abstand von der Fahrzeugkarosserie zu entsprechenden Fahrbahnmarkierung ermittelt wird. Ferner ist denkbar, dass der Fotosensor unter anderem auch dazu eingesetzt wird, die Lichtverhältnisse der Fahrzeugumgebung zu ermitteln. Darauf basierend kann die Steuereinrichtung Rückschlüsse darüber ziehen, ob die Aktivierung der Beleuchtungsmittel notwendig ist oder nicht.

Die erfindungsgemäße Rangierhilfevorrichtung kann in vorteilhafter Weise derart weitergebildet werden, dass die Steuereinrichtung eingerichtet ist, die Beleuchtungsmittel zusätzlich wenigstens in Abhängigkeit von einem Einlegen eines Rückwärtsgangs des Fahrzeugs und/oder einem Anschalten einer Fahrzeugabblendbeleuchtung und/oder eines Lenkradeinschlagwinkels zu steuern. Selbstverständlich kann es in zumindest einigen Fällen sinnvoll sein, die aus dem Stand der Technik bekannten Aktivierungs- und Deaktivierungsbedingungen zusätzlich auch bei der erfindungsgemäßen Rangierhilfevorrichtung anzuwenden, um zu ermöglichen, dass die Beleuchtungsmittel der erfindungsgemäßen Rangierhilfevorrichtung in Abhängigkeit von sowohl fahrzeugszustandspezifischen Parametern als auch zumindest teilweise von fahrzeugumgebungsspezifischen Parametern aktiviert und deaktiviert werden kann. Dies kann in gewissen Fällen zu einer Synergie bzw. einer besonders vorteilhaften und zuverlässigen automatischen Betätigung der Beleuchtungsmittel der Rangierhilfevorrichtung führen; beispielsweise ist die Aktivierung der Beleuchtungsmittel der Rangierhilfeeinrichtung nicht bei jedem größeren Lenkradeinschlagwinkel zwangsweise erforderlich und erwünscht, jedoch kann basierend auf den vorgenannten erfindungsgemäßen Aktivierungs- bzw. Deaktivierungsbedingungen, wie eine niedrige Fahrgeschwindigkeit bei hohem Lenkradeinschlagwinkel, auf ein Rangiermanöver des Fahrzeugs geschlossen werden. Gleiches gilt sinngemäß auch für das Einlegen eines Rückwärtsgangs sowie für das Anschalten einer Fahrzeugabblendbeleuchtung.

Weiterhin kann die erfindungsgemäße Rangierhilfevorrichtung so verwirklicht werden, dass die Steuereinrichtung eingerichtet ist, die Beleuchtungsmittel zu deren Aktivierung zu steuern, wenn die Fahrzeuggeschwindigkeit eine vorbestimmte Fahrzeuggeschwindigkeit unterschreitet und/oder die Fahrzeugbeschleunigung eine vorbestimmte Fahrzeugbeschleunigung unterschreitet. Insbesondere ist es in diesem Fall vorteilhaft, die Beleuchtungsmittel der Rangierhilfevorrichtung zu aktivieren, wenn die Fahrzeuggeschwindigkeit beispielsweise eine relativ niedrige Geschwindigkeit, insbesondere eine Schrittgeschwindigkeit, unterschreitet, da in diesem Fall mit erhöhter Wahrscheinlichkeit ein Rangiermanöver des Fahrzeugs stattfindet. Beispielsweise werden die Beleuchtungsmittel der Rangierhilfevorrichtung bei einer Geschwindigkeit des Fahrzeugs von unter 3,6 km/h aktiviert. Vorzugsweise wird zusätzlich zu der Berücksichtigung der Fahrzeuggeschwindigkeit auch die Fahrzeugbeschleunigung herangezogen. Beispielsweise kann mit erhöhter Wahrscheinlichkeit davon ausgegangen werden, dass sich das Fahrzeug bei niedrigen Fahrzeuggeschwindigkeiten sowie niedrigen Fahrzeugbeschleunigungen in einem Rangiermanöver befindet. Darüber hinaus ist in diesem Zusammenhang auch denkbar, dass die vorgenannten Aktivierungsbedingungen für eine vorbestimmte Zeitspanne vorliegen müssen, bevor die Aktivierung der Beleuchtungsmittel durch die Steuereinrichtung vorgenommen wird. Beispielsweise kann in diesem Fall vorgesehen sein, dass bei einer Fahrzeuggeschwindigkeit von nahezu 0 km/h, die darüber hinaus für eine Zeitspanne von mehreren Sekunden vorliegt, davon ausgegangen wird, dass kein Rangiermanöver des Fahrzeugs vorgenommen wird, sondern möglicherweise auf einen Fahrzeugstillstand, beispielsweise aufgrund einer Rotphase einer Ampel, geschlossen wird.

Darüber hinaus kann die erfindungsgemäße Rangierhilfevorrichtung derart umgesetzt werden, dass die Steuereinrichtung eingerichtet ist, die Beleuchtungsmittel zu deren Deaktivierung zu steuern, wenn die Fahrzeuggeschwindigkeit eine vorbestimmte Fahrzeuggeschwindigkeit überschreitet und/oder die Fahrzeugbeschleunigung eine vorbestimmte Fahrzeugbeschleunigung überschreitet. Umgekehrt zu dem vorstehend beschriebenen Fall werden bei Überschreiten einer gewissen Fahrzeuggeschwindigkeit, beispielsweise bei Überschreiten der Schrittgeschwindigkeit, die Beleuchtungsmittel der erfindungsgemäßen Rangierhilfevorrichtung deaktiviert, da die Steuereinrichtung dann davon ausgehen kann, dass kein Rangiermanöver des Fahrzeugs vorgenommen wird. In diesem Fall ist es besonders vorteilhaft, die Fahrzeugbeschleunigung in die Beurteilung über die Deaktivierung der Beleuchtungsmittel mit einzubeziehen, da auch bei höheren Fahrzeugbeschleunigungen über eine vorbestimmte Zeitspanne davon ausgegangen werden kann, dass kein Rangiermanöver des Fahrzeugs vorgenommen wird, sondern das Fahrzeug auf die normale vorgeschriebene Fahrgeschwindigkeit beschleunigt wird.

Des Weiteren kann die erfindungsgemäße Rangierhilfevorrichtung so realisiert werden, dass die Steuereinrichtung eingerichtet ist, die Beleuchtungsmittel zu deren Aktivierung anzusteuern, wenn der Abstand des Fahrzeugs gegenüber der Fahrbahnbegrenzung oder dem Fahrzeughindernis einen vorbestimmten Abstand unterschreitet. In diesem Fall ist es besonders vorteilhaft, die Beleuchtungsmittel der erfindungsgemäßen Rangierhilfevorrichtung dann zu aktivieren, wenn sich das Fahrzeug sehr nahe an einer Fahrbahnbegrenzung, wie einer Fahrbahnmarkierung, einem Leitpfosten oder einer Leitplanke, befindet, also sich der Abstand gegenüber der Fahrbahnbegrenzung verringert und einen vorbestimmten Abstand unterschreitet. Dieser Abstand kann beispielweise 30 cm zwischen Fahrzeugkarosserie und Fahrbahnmarkierung betragen. Vorzugsweise wird zusätzlich zur Berücksichtigung des vorgenannten Abstands auch die Fahrzeuggeschwindigkeit betrachtet. Denn häufig kann der Fall auftreten, dass das Fahrzeug sich zwar nahe von Fahrbahnbegrenzungen wie Fahrbahnmarkierungen, Leitpfosten oder Leitplanken befindet und dabei den vorbestimmten Abstand unterschreitet, jedoch tatsächlich kein Rangiermanöver vorgenommen wird. In diesem Fall wird es besonders bevorzugt, weiterhin zu überprüfen, ob die Fahrzeuggeschwindigkeit eine vorbestimmte Fahrzeuggeschwindigkeit überschreitet. Darauf basierend kann beurteilt werden, ob sich das Fahrzeug in voller Fahrt befindet oder ein Rangiermanöver vorgenommen wird, bei dem auch der vorbestimmte Abstand unterschritten wird. Ebenso ist denkbar, dass lediglich an den Stellen, an denen der vorbestimmte Abstand unterschritten wird, eine Beleuchtung durch die Beleuchtungsmittel vorgenommen wird; beispielsweise können die Beleuchtungsmittel mehrere Scheinwerfer umfassen, wobei in diesem Fall dann lediglich der Scheinwerfer aktiviert, bei dem die vorgenannte Abstandsunterschreitung ermittelt wird.

Ferner kann die erfindungsgemäße Rangierhilfevorrichtung so ausgebildet werden, dass die Steuereinrichtung eingerichtet ist, die Beleuchtungsmittel zu deren Deaktivierung anzusteuern, wenn der Abstand des Fahrzeugs gegenüber der Fahrbahnbegrenzung oder dem Fahrbahnhindernis einen vorbestimmten Abstand überschreitet. Umgekehrt zu dem vorstehend beschriebenen Fall werden bei Überschreiten des vorbestimmten Abstands zwischen dem Fahrzeug und den Fahrbahnmarkierungen die Beleuchtungsmittel deaktiviert. Vorzugsweise wird aber auch in diesem Fall die Fahrzeuggeschwindigkeit zusätzlich berücksichtigt, so dass trotz etwaigen großen Abstands des Fahrzeugs gegenüber Fahrbahnbegrenzungen oder Fahrbahnhindernissen eine Aktivierung, beispielsweise bei relativ niedrigen Fahrzeuggeschwindigkeiten und weiteren vorliegenden Aktivierungsbedingungen, vorgenommen werden kann.

Weiterhin kann die erfindungsgemäße Rangierhilfevorrichtung derart weitergebildet werden, dass die Beleuchtungsmittel durch eine Rangierhilfebeleuchtung ausgebildet wird, die eingerichtet ist, von der Steuereinrichtung separat von einer Fahrzeugstandardbeleuchtung gesteuert zu werden. In diesem Fall kann die Fahrzeugstandardbeleuchtung sämtliche in dem Fahrzeug, insbesondere dem Nutzfahrzeug wie ein Lkw, üblich vorgesehene Beleuchtungsmittel umfassen. Vorzugsweise umfasst die vorgenannte Fahrzeugstandardbeleuchtung ein Fernlicht zum Ausleuchten der Fahrbahn, ein Abblendlicht, um die Fahrbahn bis zu einem gewissen Ausmaß auszuleuchten und dabei eine Blendung beispielsweise des Gegenverkehrs und anderer Verkehrsteilnehmer zu vermeiden, ein Standlicht bzw. Begrenzungslicht, das üblicherweise gemeinsam mit dem Abblendlicht oder Fernlicht leuchtet, so dass auch bei Ausfall von beispielsweise einer Leuchte des Abblendlichts zumindest die Umrisse des eigenen Fahrzeuges für den Gegenverkehr zu erkennen sind, ein Parklicht für einen Parkzustand des Fahrzeugs, einen Fahrtrichtungsanzeiger bzw. -blinker, einen Nebelscheinwerfer, ein Abbiegelicht, Weitstrahler, welche optional ein zusätzliches Fernlicht darstellen, Tagfahrleuchten, Schluss- oder Rückleuchten, die üblicherweise zusammen mit dem Abblendlicht aktiviert sind, Bremsleuchten, Rückstrahler, Kennzeichenbeleuchtung, Nebelschlussleuchten, Rückfahrscheinwerfer, welche insbesondere in weißer Farbe ausgebildet sind, aber nur bei eingelegtem Rückwärtsgang Licht ausstrahlen, etc. Besonders bevorzugt werden die Beleuchtungsmittel der erfindungsgemäßen Rangierhilfevorrichtung als separate bzw. zusätzliche Scheinwerfer ausgebildet, d.h. zusätzlich zu der vorgenannten Fahrzeugstandardbeleuchtung; ebenso kann die Rangierhilfebeleuchtung der erfindungsgemäßen Rangierhilfevorrichtung entsprechend den Rangierhilfescheinwerfern ausgebildet sein, die in der vorgenannten Patentschrift DE 41 19 436 C2 beschrieben sind, deren Inhalt somit vollständig in diese Offenbarung aufgenommen ist. Alternativ kann die Rangierbeleuchtung ebenfalls in bereits vorhandenen Beleuchtungsmitteln der Fahrzeugstandardbeleuchtung, wie sie vorstehend beschreiben ist, angeordnet sein. Beispielsweise können die Beleuchtungsmittel der Rangierhilfevorrichtung Beleuchtungsmittel der Fahrzeugstandardbeleuchtung sein, die somit mehrere Funktionen, d.h. neben der üblichen Funktion auch die Rangierhilfebeleuchtungsfunktion, ausführen. Ebenso denkbar ist aber auch, dass die Beleuchtungsmittel in einem der Fahrzeugstandardbeleuchtung angehörenden Scheinwerfer zusätzlich bzw. separat integriert sind.

Das gattungsgemäße Verfahren baut auf dem gattungsgemäßen Stand der Technik dadurch auf, dass die Beleuchtungsmittel wenigstens in Abhängigkeit von einer Fahrzeuggeschwindigkeit und/oder einer Fahrzeugbeschleunigung und/oder eines Abstands des Fahrzeugs gegenüber einer Fahrbahnbegrenzung oder einem Fahrbahnhindernis gesteuert werden. Dadurch ergeben sich die im Zusammenhang mit der erfindungsgemäßen Rangierhilfevorrichtung genannten Eigenschaften und Vorteile auf gleiche oder ähnliche Weise, weshalb zur Vermeidung von Wiederholungen auf die entsprechenden Ausführungen im Zusammenhang mit der erfindungsgemäßen Rangierhilfevorrichtung verwiesen wird.

Gleiches gilt sinngemäß auch für die folgenden bevorzugten Ausführungsformen des erfindungsgemäßen Verfahrens, wobei auch diesbezüglich zur Vermeidung von Wiederholungen auf die entsprechenden Ausführungen im Zusammenhang mit der erfindungsgemäßen Rangierhilfevorrichtung verwiesen wird.

Das erfindungsgemäße Verfahren kann in vorteilhafter Weise so ausgeführt werden, dass die Beleuchtungsmittel zusätzlich wenigstens in Abhängigkeit von einem Einlegen eines Rückwärtsgangs des Fahrzeugs und/oder einem Anschalten einer Fahrzeugabblendbeleuchtung und/oder eines Lenkradeinschlagwinkels gesteuert werden.

Das erfindungsgemäße Verfahren kann weiterhin in vorteilhafter Weise derart ausgestaltet werden, dass die Beleuchtungsmittel zu deren Aktivierung angesteuert werden, wenn die Fahrzeuggeschwindigkeit eine vorbestimmten Fahrzeuggeschwindigkeit unterschreitet und/oder die Fahrzeugbeschleunigung eine vorbestimmte Fahrzeugbeschleunigung unterschreitet.

Ferner kann das erfindungsgemäße Verfahren so umgesetzt werden, dass die Beleuchtungsmittel zu deren Deaktivierung gesteuert werden, wenn die die Fahrzeuggeschwindigkeit eine vorbestimmte Fahrzeuggeschwindigkeit überschreitet und/oder die Fahrzeugbeschleunigung eine vorbestimmte Fahrzeugbeschleunigung überschreitet.

Darüber hinaus kann das erfindungsgemäße Verfahren so realisiert werden, dass die Beleuchtungsmittel zu deren Aktivierung gesteuert werden, wenn der Abstand des Fahrzeugs gegenüber der Fahrbahnmarkierung oder dem Fahrbahnhindernis einen vorbestimmten Abstand unterschreitet.

Des Weiteren kann das erfindungsgemäße Verfahren so ausgebildet werden, dass die Beleuchtungsmittel zu deren Deaktivierung gesteuert werden, wenn der Abstand des Fahrzeugs gegenüber der Fahrbahnmarkierung oder dem Fahrbahnhindernis einen vorbestimmten Abstand überschreitet.

Ferner kann das erfindungsgemäße Verfahren so weitergebildet werden, dass die durch eine Rangierhilfebeleuchtung ausgebildeten Beleuchtungsmittel separat von einer Fahrzeugstandardbeleuchtung gesteuert werden.

Das erfindungsgemäße Fahrzeug umfasst mit die vorstehend erläuterte erfindungsgemäße Rangierhilfevorrichtung, die vorzugsweise zur Durchführung des erfindungsgemäßen Verfahrens geeignet ist.

Die erfindungsgemäße Scheinwerfervorrichtung baut auf dem gattungsgemäßen Stand der Technik dadurch auf, dass die Leuchtmittel zum Beleuchten der Fahrzeugumgebung und die Leuchtmittel zum Beleuchten des Fahrzeuguntergrunds und/oder der Fahrzeugkarosserie durch eine Trennwand zum Beleuchten zumindest teilweise unterschiedlicher Bereiche getrennt und/oder als richtungsabhängige Leuchtmittel zum jeweiligen richtungsabhängigen Beleuchten zumindest teilweise unterschiedlicher Bereiche ausgebildet sind.

Die erfindungsgemäße Scheinwerfervorrichtung kann in vorteilhafterweise derart weitergebildet werden, dass die Leuchtmittel durch ein oder mehrere Elemente aus einer Glühlampe, Gasentladungslampe, Bogenlampe, Leuchtdiode ausgebildet sind.

Weiterhin kann die erfindungsgemäße Scheinwerfervorrichtung so verwirklicht werden, dass die Leuchtmittel in gleicher oder unterschiedlicher Bauart ausgeführt sind.

Bevorzugte Ausführungsformen der Erfindung werden nachfolgend anhand der Figuren beispielhaft erläutert. Die beschriebenen Ausführungsformen sind rein beispielhaft und in keinster Weise beschränkend zu verstehen.

Es zeigen:
Fig. 1 die erfindungsgemäße Rangierhilfevorrichtung, die zur Durchführung des erfindungsgemäßen Verfahrens geeignet ist, gemäß einem ersten Ausführungsbeispiel der Erfindung; und
Fig. 2 die erfindungsgemäße Rangierhilfevorrichtung, die zur Durchführung des erfindungsgemäßen Verfahrens geeignet ist, gemäß einem zweiten Ausführungsbeispiel der Erfindung.

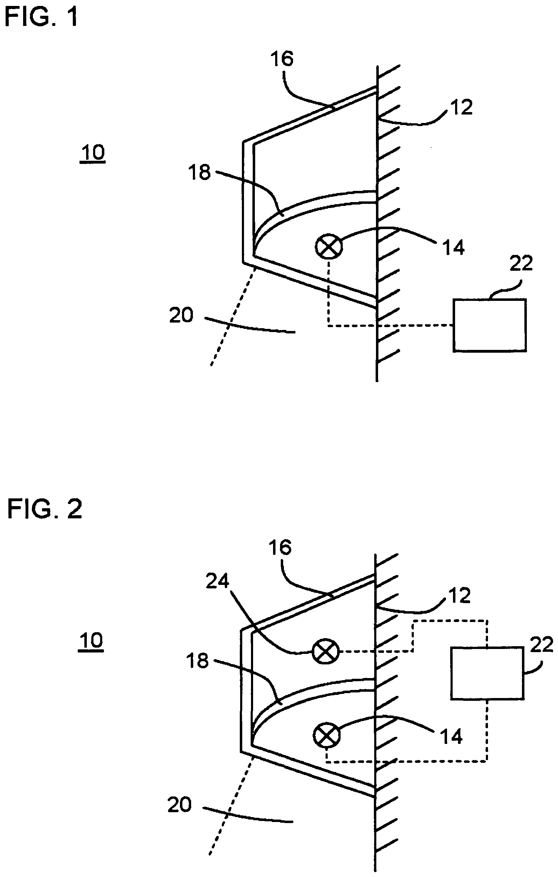

Fig. 1 zeigt die erfindungsgemäße Rangierhilfevorrichtung 10 gemäß einem ersten Ausführungsbeispiel der Erfindung. Die erfindungsgemäße Rangierhilfevorrichtung 10 ist in diesem Fall für ein Nutzfahrzeug, insbesondere einen Lastkraftwagen (Lkw), vorgesehen. Wie aus Figur 1 ersichtlich ist, umfasst die erfindungsgemäße Rangierhilfevorrichtung Beleuchtungsmittel, welche in diesem Ausführungsbeispiel in der Form eines Scheinwerfers ausgebildet sind, der im aktivierten Zustand einen auszuleuchtenden Bereich bzw. ein Beleuchtungsfeld 20 ausleuchtet, das zumindest teilweise einen nicht dargestellten Fahrzeuguntergrund und zumindest teilweise einen Nutzfahrzeugabschnitt bzw. einen Nutzfahrzeugkarosserieabschnitt 12 umfasst. Der Nutzfahrzeugabschnitt kann dabei beispielsweise durch einen Anhänger, einen Auflieger, eine Zugmaschine, einen Sattelschlepper, etc. ausgebildet werden. Insbesondere wird der Scheinwerfer in diesem Ausführungsbeispiel durch eine Rangierhilfebeleuchtung ausgebildet, die neben bzw. zusätzlich zu einer üblicherweise am Fahrzeug vorgesehen Fahrzeugstandardbeleuchtung bereitgestellt wird. Die als Scheinwerfer ausgebildeten Beleuchtungsmittel umfassen ein Lampenabdeckglas bzw. ein Scheinwerferglas 16, das in diesem Ausführungsbeispiel an dem Nutzfahrzeugabschnitt 12 angeordnet und befestigt ist. Weiterhin sind Leuchtmittel 14 in dem Scheinwerferglas 16 angeordnet, welche als eine oder mehrere dem Fachmann bekannte Glühlampen, Gasentladungslampen, Bogenlampen, Lumineszenzdioden bzw. Leuchtdioden (LED = engl. "light emitting diode"), etc. ausgebildet sein können. Darüber hinaus ist eine Trennwand 18 in dem Scheinwerferglas 16 derart angeordnet, dass in dem Scheinwerfer zwei Räume ausgebildet sind, nämlich ein wie in Figur 1 ein gezeigter oberer und unterer Raum, wobei sich die Leuchtmittel 14 in dem unteren Raum befinden. In dem oberen Raum sind hingegen keine Leuchtmittel vorgesehen. Jedoch ist die Trennwand 18 in diesem Ausführungsbeispiel zumindest teilweise Lichtdurchlässig bzw. als Lichtfilter ausgebildet, so dass der Scheinwerfer zur Ausleuchtung eines weiteren nicht näher beschriebenen Beleuchtungsfeldes verwendet bzw. angepasst werden kann. Zur Steuerung der Beleuchtungsmittel zu deren Aktivierung zum Ausleuchten des Beleuchtungsfeldes 20 sowie zu deren Deaktivierung zur Erzielung eines ausgeschalteten Zustands weist die erfindungsgemäße Rangierhilfevorrichtung 10 weiterhin eine dem Fachmann bekannte Steuereinrichtung bzw. einen Controller 22 auf, der mit den Leuchtmitteln 14 auf dem Fachmann bekannte Weise zu deren Aktivierung und/oder Deaktivierung gekoppelt ist, beispielsweise über elektrische Leitungen, und ein An- und Ausschalten der Beleuchtungsmittel bewirken kann. Die Steuereinrichtung 22 kann zusätzlich bzw. separat für die Rangierhilfevorrichtung 10 vorgesehen oder auch teil eines ohnehin im Nutzfahrzeug befindlichen Steuersystems sein.

Im Betrieb führt die erfindungsgemäße Rangierhilfevorrichtung 10 das erfindungsgemäße Verfahren zur Durchführung der Rangierhilfe des Nutzfahrzeugs durch, das sich wie folgt darstellt.

Die Steuereinrichtung 22 steuert die Beleuchtungsmittel bzw. die als Scheinwerfer ausgebildete Rangierhilfebeleuchtung unter anderem in Abhängigkeit von einer Fahrzeuggeschwindigkeit und/oder einer Fahrzeugbeschleunigung und/oder eines Abstands des Fahrzeugs gegenüber einer Fahrbahnmarkierung oder einem Fahrbahnhindernis. Zu diesem Zweck überwacht die Steuereinrichtung 22 fortwährend über nicht dargestellte und dem Fachmann bekannte Geschwindigkeitssensoren, Beschleunigungssensoren und Abstands- und Fotosensoren die derzeitige bzw. momentane Fahrzeuggeschwindigkeit, die derzeitige Fahrzeugbeschleunigung sowie den derzeitigen Abstand des Fahrzeugs bzw. der Fahrzeugkarosserie gegenüber Fahrbahnbegrenzungen und Fahrbahnhindernissen. Fahrbahnbegrenzungen sind beispielsweise Fahrbahnmarkierungen, Leitpfosten, Leitplanken, Bordsteine, etc. und Fahrbahnhindernisse sind beispielspielsweise geparkte Fahrzeuge und weitere mögliche Hindernisse auf der Fahrbahn oder nahe der Fahrbahn, wie Ampelanlagen, Straßenschilder, Hydranten, etc.

Die Steuereinrichtung 22 aktiviert die Rangierbeleuchtung in diesem Ausführungsbeispiel zumindest dann, wenn die momentan erfasste Fahrzeuggeschwindigkeit eine vorbestimmte Fahrzeuggeschwindigkeit, beispielsweise eine Schrittgeschwindigkeit, unterschreitet. Zusätzlich berücksichtigt die Steuereinrichtung 22 die Fahrzeugbeschleunigung und aktiviert die Rangierbeleuchtung auch nur dann, wenn die Fahrzeugbeschleunigung eine vorbestimmte Fahrzeugbeschleunigung unterschreitet.

Umgekehrt deaktiviert die Steuereinrichtung 22 die Rangierbeleuchtung oder behält deren Deaktivierung bei, wenn die Fahrzeuggeschwindigkeit die vorbestimmte Fahrzeuggeschwindigkeit, beispielsweise die Schrittgeschwindigkeit, überschreitet. Zusätzlich berücksichtigt die Steuereinrichtung 22 die Fahrzeugbeschleunigung und deaktiviert die Rangierbeleuchtung oder behält deren Aktivierung bei, wenn die Fahrzeugbeschleunigung die vorbestimmte Fahrzeugbeschleunigung überschreitet, obwohl die momentane Fahrzeuggeschwindigkeit die vorbestimmte Fahrzeuggeschwindigkeit unterschreitet.

Vorzugsweise berücksichtigt die Steuereinrichtung 22 auch eine vorbestimmte Zeitspanne, in der die Fahrzeuggeschwindigkeit und die Fahrzeugbeschleunigung mindestens vorliegen müssen, um die Aktivierung der Beleuchtungsmittel vorzunehmen.

Ferner berücksichtigt die Steuereinrichtung 22 den Abstand des Fahrzeugs gegenüber Fahrbahnbegrenzungen und Fahrbahnhindernissen und aktiviert die Rangierbeleuchtung, wenn der Abstand des Fahrzeugs gegenüber der Fahrbahnbegrenzung oder dem Fahrbahnhindernis einen vorbestimmten Abstand unterschreitet. Insbesondere berücksichtigt die Steuereinrichtung 22 dabei auch die momentane Fahrzeuggeschwindigkeit und beurteilt basierend auf der momentanen Fahrzeuggeschwindigkeit sowie dem aktuellen Abstand, ob eine Aktivierung der Rangierbeleuchtung vorgenommen werden soll; insbesondere wird eine Aktivierung der Rangierbeleuchtung dann vorgenommen, wenn die Fahrzeuggeschwindigkeit die vorbestimmte Fahrzeuggeschwindigkeit und der momentane Abstand den vorbestimmten Abstand unterschreitet. Hingegen wird eine Aktivierung der Rangierbeleuchtung dann nicht vorgenommen, wenn die Fahrzeuggeschwindigkeit die vorbestimmte Fahrzeuggeschwindigkeit überschreitet, obwohl der momentane Abstand den vorbestimmten Abstand unterschreitet.

Fig. 2 zeigt eine erfindungsgemäße Rangierhilfevorrichtung 10 gemäß einem zweiten Ausführungsbeispiel der Erfindung. Die erfindungsgemäße Rangierhilfevorrichtung 10 gemäß dem zweiten Ausführungsbeispiel unterscheidet sich von der Rangierhilfevorrichtung 10 gemäß dem ersten Ausführungsbeispiel lediglich darin, dass zwei separate Leuchtmittel 24 und 14 in dem oberen und unteren Raum des Scheinwerfers integriert sind, die unterschiedliche Bereiche ausleuchten. In diesem Fall ist die Trennwand 18 lichtundurchlässig ausgebildet, so dass beide Leuchtmittel 14, 24 ihren separaten auszuleuchtenden Bereichen zugeordnet sind. Dementsprechend ist die Steuereinrichtung 22 auf dem Fachmann bekannte Weise mit beiden Leuchtmitteln 14, 24 gekoppelt, um deren Aktivierung sowie Deaktivierung, wie im Zusammenhang mit dem Leuchtmittel 14 des ersten Ausführungsbeispiels erläutert, zu bewirken. Beispielsweise kann das Leuchtmittel 24 Teil der Fahrzeugstandardbeleuchtung sein und bestimmungsgemäß die Fahrzeugumgebung ausleuchten bzw. beleuchten. Hingegen kann das Leuchtmittel 14 bestimmungsgemäß zum Ausleuchten bzw. Beleuchten des Fahrzeuguntergrunds und/oder teilweise der Fahrzeugkarosserie vorgesehen sein, d. h. zur Ausleuchtung eines unterschiedlichen Bereichs im Hinblick auf das Leuchtmittel 24.

Beispielsweise können die Leuchtmittel 14 und 24 in diesem Ausführungsbeispiel jeweils als eine oder mehrere dem Fachmann bekannte Glühlampen, Gasentladungslampen, Bogenlampen, Lumineszenzdioden bzw. Leuchtdioden (LED = engl. "light emitting diode"), etc. ausgebildet sein. Vorzugsweise werden die Leuchtmittel 14 und 24 jedoch jeweils als eine oder mehrere Leuchtdioden (LED) ausgebildet. Dementsprechend können die als eine oder mehrere Leuchtdioden ausgebildeten Leuchtmittel 24 beispielsweise zur Ausleuchtung der Fahrzeugumgebung dienen. Hingegen können die als eine oder mehrere Leuchtdioden ausgebildeten Leuchtmittel 14 beispielsweise zur Ausleuchtung zumindest des Fahrzeuguntergrunds und vorzugsweise teilweise der Fahrzeugkarosserie dienen. Im Falle einer Ausleuchtung der seitlichen Fahrzeugumgebung in Bezug auf die Fahrzeuglängsachse des Fahrzeugs können die Leuchtmittel 24 beispielsweise als gelbes Licht abstrahlende Leuchtdioden ausgebildet sein, während die Leuchtmittel 14 zur Ausleuchtung des Fahrzeuguntergrunds beispielsweise als weißes Licht abstrahlende Leuchtdioden ausgebildet sind.

Weiterhin können die Leuchtmittel 14 und 24 auch in unterschiedlichen Leuchtmittelbauarten vorgesehen sein. Beispielsweise sind die Leuchtmittel 24 zur Ausleuchtung der Fahrzeugumgebung durch eine oder mehrere herkömmliche Glühlampen, etc. ausgebildet, während die Leuchtmittel 14 zur Ausleuchtung des Fahrzeuguntergrunds als eine oder mehrere Leuchtdioden ausgebildet werden.

In einer Abwandlung des zweiten Ausführungsbeispiels kann vorgesehen sein, dass die lichtundurchlässige Trennwand 18 in dem als Scheinwerfer ausgestalteten Beleuchtungsmittel weggelassen ist und die Leuchtmittel 14 und 24 als richtungsabhängige Leuchtmittel 14, 24 ausgebildet sind. Vorzugsweise wird die Richtungsabhängigkeit des Leuchtmittels 24 dann derart gewählt, dass die Leuchtmittel 24 lediglich die Fahrzeugumgebung, beispielsweise lediglich die vordere, hintere und seitliche Fahrzeugumgebung, ausleuchten. Hingegen wird die Richtungsabhängigkeit der Leuchtmittel 14 dann derart gewählt, dass die Leuchtmittel 14 lediglich den Fahrzeuguntergrund an vorbestimmten Stellen und/oder teilweise die Fahrzeugkarosserie ausleuchten, d. h. Bereiche, die nicht von den Leuchtmitteln 24 ausgeleuchtet werden und sich somit von den durch die Leuchtmittel 24 ausgeleuchteten Bereichen teilweise oder vollständig unterscheiden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Rangierhilfevorrichtung
- 12: Nutzfahrzeugabschnitt bzw. Nutzfahrzeugkarosserieabschnitt
- 14: Leuchtmittel
- 16: Lampenabdeckglas bzw. Scheinwerferglas
- 18: Trennwand
- 20: auszuleuchtender Bereich bzw. Beleuchtungsfeld
- 22: Steuereinrichtung bzw. Controller
- 24: Leuchtmittel

## Patentansprüche

1. Rangierhilfevorrichtung (10) für ein Fahrzeug, insbesondere ein Nutzfahrzeug, umfassend Beleuchtungsmittel (14, 24), die eingerichtet sind, zumindest einen Fahrzeuguntergrund und/oder eine Fahrzeugkarosserie zumindest teilweise zu beleuchten, und umfassend eine Steuereinrichtung (22), die eingerichtet ist, die Beleuchtungsmittel (14, 24) zu deren Aktivierung und/oder Deaktivierung zu steuern, wobei die Steuereinrichtung (22) eingerichtet ist, die Beleuchtungsmittel (14, 24) wenigstens in Abhängigkeit von einer Fahrzeuggeschwindigkeit zu steuern, **dadurch gekennzeichnet, dass** die Steuereinrichtung (22) die Beleuchtungsmittel (14, 24) aktiviert, falls das Fahrzeug über eine bestimmte Zeitdauer eine relativ niedrige Fahrzeuggeschwindigkeit aufweist.

2. Rangierhilfevorrichtung (10) nach Anspruch 1, **dadurch gekennzeichnet, dass** die Steuereinrichtung (22) eingerichtet ist, die Beleuchtungsmittel (14, 24) zusätzlich wenigstens in Abhängigkeit von einem Einlegen eines Rückwärtsgangs des Fahrzeugs und/oder einem Anschalten einer Fahrzeugabblendbeleuchtung und/oder eines Lenkradeinschlagwinkels und/oder einer Fahrzeugbeschleunigung und/oder eines Abstands des Fahrzeugs gegenüber zumindest einer Fahrbahnbegrenzung oder einem Fahrbahnhindernis zu steuern.

3. Rangierhilfevorrichtung (10) nach Anspruch 1 oder 2, **dadurch gekennzeichnet, dass** die Steuereinrichtung (22) eingerichtet ist, die Beleuchtungsmittel (14, 24) zu deren Aktivierung zu steuern, wenn die Fahrzeuggeschwindigkeit eine vorbestimmte Fahrzeuggeschwindigkeit unterschreitet und/oder die Fahrzeugbeschleunigung eine vorbestimmte Fahrzeugbeschleunigung unterschreitet.

4. Rangierhilfevorrichtung (10) nach einem der Ansprüche 1 bis 3, **dadurch gekennzeichnet, dass** die Steuereinrichtung (22) eingerichtet ist, die Beleuchtungsmittel (14, 24) zu deren Deaktivierung zu steuern, wenn die Fahrzeuggeschwindigkeit eine vorbestimmte Fahrzeuggeschwindigkeit überschreitet und/oder die Fahrzeugbeschleunigung eine vorbestimmte Fahrzeugbeschleunigung überschreitet.

5. Rangierhilfevorrichtung (10) nach einem der Ansprüche 1 bis 4, **dadurch gekennzeichnet, dass** die Steuereinrichtung (22) eingerichtet ist, die Beleuchtungsmittel (14, 24) zu deren Aktivierung zu steuern, wenn der Abstand des Fahrzeugs gegenüber der Fahrbahnbegrenzung oder dem Fahrbahnhindernis einen vorbestimmten Abstand unterschreitet.

6. Rangierhilfevorrichtung (10) nach einem der Ansprüche 1 bis 5, **dadurch gekennzeichnet, dass** die Steuereinrichtung (22) eingerichtet ist, die Beleuchtungsmittel (14, 24) zu deren Deaktivierung zu steuern, wenn der Abstand des Fahrzeugs gegenüber der Fahrbahnbegrenzung oder dem Fahrbahnhindernis einen vorbestimmten Abstand überschreitet.

7. Rangierhilfevorrichtung (10) nach einem der Ansprüche 1 bis 6, **dadurch gekennzeichnet, dass** die Beleuchtungsmittel (14, 24) durch eine Rangierhilfebeleuchtung ausgebildet wird, die eingerichtet ist, von der Steuereinrichtung (22) separat von einer Fahrzeugstandardbeleuchtung gesteuert zu werden.

8. Verfahren zur Durchführung einer Rangierhilfe für ein Fahrzeug, insbesondere für ein Nutzfahrzeug, vorzugsweise zur Durchführung mit einer Rangierhilfevorrichtung gemäß einem der Ansprüche 1 bis 7, bei dem zur Beleuchtung von zumindest einem Fahrzeuguntergrund und/oder einer Fahrzeugkarosserie eingerichtete Beleuchtungsmittel (14, 24) zu deren Aktivierung und/oder Deaktivierung gesteuert werden, wobei die Beleuchtungsmittel (14, 24) wenigstens in Abhängigkeit von einer Fahrzeuggeschwindigkeit gesteuert werden, **dadurch gekennzeichnet, dass** die Beleuchtungsmittel (14, 24) aktiviert werden, falls das Fahrzeug über eine bestimmte Zeitdauer eine relativ niedrige Fahrzeuggeschwindigkeit aufweist.

9. Verfahren nach Anspruch 8, **dadurch gekennzeichnet, dass** die Beleuchtungsmittel (14, 24) zusätzlich wenigstens in Abhängigkeit von einem Einlegen eines Rückwärtsgangs des Fahrzeugs und/oder einem Anschalten einer Fahrzeugabblendbeleuchtung und/oder eines Lenkradeinschlagwinkels und/oder einer Fahrzeugbeschleunigung und/oder eines Abstands des Fahrzeugs gegenüber zumindest einer Fahrbahnbegrenzung oder einem Fahrbahnhindernis gesteuert werden.

10. Verfahren nach Anspruch 8 oder 9, **dadurch gekennzeichnet, dass** die Beleuchtungsmittel (14, 24) zu deren Aktivierung gesteuert werden, wenn die Fahrzeuggeschwindigkeit eine vorbestimmte Fahrzeuggeschwindigkeit unterschreitet und/oder die Fahrzeugbeschleunigung eine vorbestimmte Fahrzeugbeschleunigung unterschreitet.

11. Verfahren nach einem der Ansprüche 8 bis 10, **dadurch gekennzeichnet, dass** die Beleuchtungsmittel (14, 24) zu deren Deaktivierung gesteuert werden, wenn die Fahrzeuggeschwindigkeit eine vorbestimmte Fahrzeuggeschwindigkeit überschreitet und/oder die Fahrzeugbeschleunigung eine vorbestimmte Fahrzeugbeschleunigung überschreitet.

12. Verfahren nach einem der Ansprüche 8 bis 11, **dadurch gekennzeichnet, dass** die Beleuchtungsmittel (14, 24) zu deren Aktivierung gesteuert werden, wenn der Abstand des Fahrzeugs gegenüber der Fahrbahnbegrenzung oder dem Fahrbahnhindernis einen vorbestimmten Abstand unterschreitet.

13. Verfahren nach einem der Ansprüche 8 bis 12, **dadurch gekennzeichnet, dass** die Beleuchtungsmittel (14, 24) zu deren Deaktivierung gesteuert werden, wenn der Abstand des Fahrzeugs gegenüber der Fahrbahnbegrenzung oder dem Fahrbahnhindernis einen vorbestimmten Abstand überschreitet.

14. Verfahren nach einem der Ansprüche 8 bis 13, **dadurch gekennzeichnet, dass** die durch eine Rangierhilfebeleuchtung ausgebildeten Beleuchtungsmittel (14, 24) separat von einer Fahrzeugstandardbeleuchtung gesteuert werden.

15. Fahrzeug, insbesondere Nutzfahrzeug, umfassend eine Rangierhilfevorrichtung gemäß einem der Ansprüche 1 bis 7, die insbesondere zur Durchführung des Verfahrens nach einem der Ansprüche 8 bis 14 geeignet ist.

## Claims

1. Manoeuvring aid (10) for a vehicle, in particular a utility vehicle, comprising illumination means (14, 24) which are configured to at least partially illuminate at least an underlying surface under the vehicle and/or a vehicle bodywork, and comprising a control device (22) which is configured to control the illumination means (14, 24) in order to activate and/or deactivate same, wherein the control device (22) is configured to control the illumination means (14, 24) at least in dependence on a vehicle speed, **characterized in that** the control device (22) activates the illumination means (14, 24) if the vehicle has a relatively low vehicle speed over a specific time period.

2. Manoeuvring aid (10) according to Claim 1, **characterized in that** the control device (22) is configured to additionally control the illumination means (14, 24) at least in dependence on engagement of a reverse gearspeed of the vehicle and/or a switching on of a vehicle dipped headlight and/or of a steering wheel lock angle and/or a vehicle acceleration and/or of a distance of the vehicle from at least one roadway boundary or an obstacle in the roadway.

3. Manoeuvring aid (10) according to Claim 1 or 2, **characterized in that** the control device (22) is configured to control the illumination means (14, 24) in order to activate same when the vehicle speed drops below a predetermined vehicle speed and/or the vehicle acceleration drops below a predetermined vehicle acceleration.

4. Manoeuvring aid (10) according to one of Claims 1 to 3, **characterized in that** the control device (22) is configured to control the illumination means (14, 24) in order to deactivate same when the vehicle speed exceeds a predetermined vehicle speed and/or the vehicle acceleration exceeds a predetermined vehicle acceleration.

5. Manoeuvring aid (10) according to one of Claims 1 to 4, **characterized in that** the control device (22) is configured to control the illumination means (14, 24) in order to activate same when the distance of the vehicle from the roadway boundary or the obstacle in the roadway drops below a predetermined distance.

6. Manoeuvring aid (10) according to one of Claims 1 to 5, **characterized in that** the control device (22) is configured to control the illumination means (14, 24) in order to deactivate same when the distance of the vehicle from the roadway boundary or the obstacle in the roadway exceeds a predetermined distance.

7. Manoeuvring aid (10) according to one of Claims 1 to 6, **characterized in that** the illumination means (14, 24) is embodied by a manoeuvring aid illumination system which is configured to be controlled by the control device (22), separately from a vehicle standard illumination system.

8. Method for carrying out manoeuvring assistance for a vehicle, in particular for a utility vehicle, preferably for carrying it out with a manoeuvring aid according to one of Claims 1 to 7, in which illumination means (14, 24) which are configured to illuminate at least an underlying surface under the vehicle and/or a vehicle bodywork are controlled in order to activate and/or deactivate same, wherein the illumination means (14, 24) are controlled at least in dependence on a vehicle speed, **characterized in that** the illumination means (14, 24) are activated if the vehicle has a relatively low vehicle speed over a specific time period.

9. Method according to Claim 8, **characterized in that** the illumination means (14, 24) are additionally controlled at least in dependence on engagement of a reverse gearspeed of the vehicle and/or a switching on of a vehicle dipped headlight and/or of a steering wheel lock angle and/or a vehicle acceleration and/or of a distance of the vehicle from at least one roadway boundary or an obstacle in the roadway.

10. Method according to Claim 8 or 9, **characterized in that** the illumination means (14, 24) are controlled so as to be activated when the vehicle speed drops below a predetermined vehicle speed and/or the vehicle acceleration drops below a predetermined vehicle acceleration.

11. Method according to one of Claims 8 to 10, **characterized in that** the illumination means (14, 24) are controlled so as to be deactivated when the vehicle speed exceeds a predetermined vehicle speed and/or the vehicle acceleration exceeds a predetermined vehicle acceleration.

12. Method according to one of Claims 8 to 11, **characterized in that** the illumination means (14, 24) are controlled so as to be activated when the distance of the vehicle from the roadway boundary or the obstacle in the roadway drops below a predetermined distance.

13. Method according to one of Claims 8 to 12, **characterized in that** the illumination means (14, 24) are controlled so as to be deactivated when the distance of the vehicle from the roadway boundary or the obstacle in the roadway exceeds a predetermined distance.

14. Method according to one of Claims 8 to 13, **characterized in that** the illumination means (14, 24) which are embodied by a manoeuvring aid illumination system are controlled separately from a vehicle standard illumination system.

15. Vehicle, in particular utility vehicle, comprising a manoeuvring aid according to one of Claims 1 to 7, which is suitable, in particular, for carrying out the method according to one of Claims 8 to 14.

## Revendications

1. Dispositif d'aide à la manœuvre (10) pour un véhicule, en particulier un véhicule utilitaire, comprenant des moyens d'éclairage (14, 24) qui sont aménagés pour éclairer au moins en partie au moins un sol sous le véhicule et/ou une carrosserie de véhicule, et comprenant un dispositif de commande (22) qui est aménagé pour commander les moyens d'éclairage (14, 24) pour les activer et/ou les désactiver, le dispositif de commande (22) étant aménagé pour commander les moyens d'éclairage (14, 24) au moins en fonction d'une vitesse de véhicule, **caractérisé en ce que** le dispositif de commande (22) active les moyens d'éclairage (14, 24) si le véhicule présente une vitesse de véhicule relative faible pendant une certaine période de temps.

2. Dispositif d'aide à la manœuvre (10) selon la revendication 1, **caractérisé en ce que** le dispositif de commande (22) est aménagé pour commander les moyens d'éclairage (14, 24) en plus au moins en fonction d'un engagement d'une marche arrière du véhicule et/ou d'un allumage des feux de croisement du véhicule et/ou d'un angle de braquage du volant et/ou d'une accélération du véhicule et/ou d'une distance du véhicule par rapport à au moins une limite de chaussée ou à un obstacle sur la chaussée.

3. Dispositif d'aide à la manœuvre (10) selon la revendication 1 ou 2, **caractérisé en ce que** le dispositif de commande (22) est aménagé pour commander les moyens d'éclairage (14, 24) pour les activer lorsque la vitesse de véhicule soupasse une vitesse de véhicule prédéterminée et/ou l'accélération de véhicule soupasse une accélération de véhicule prédéterminée.

4. Dispositif d'aide à la manœuvre (10) selon l'une quelconque des revendications 1 à 3, **caractérisé en ce que** le dispositif de commande (22) est aménagé pour commander les moyens d'éclairage (14, 24) pour les désactiver lorsque la vitesse de véhicule dépasse une vitesse de véhicule prédéterminée et/ou l'accélération de véhicule dépasse une accélération de véhicule prédéterminée.

5. Dispositif d'aide à la manœuvre (10) selon l'une quelconque des revendications 1 à 4, **caractérisé en ce que** le dispositif de commande (22) est aménagé pour commander les moyens d'éclairage (14, 24) pour les activer lorsque la distance du véhicule par rapport à la limite de chaussée ou à l'obstacle sur la chaussée soupasse une distance prédéterminée.

6. Dispositif d'aide à la manœuvre (10) selon l'une quelconque des revendications 1 à 5, **caractérisé en ce que** le dispositif de commande (22) est aménagé pour commander les moyens d'éclairage (14, 24) pour les désactiver lorsque la distance du véhicule par rapport à la limite de chaussée ou à l'obstacle sur la chaussée dépasse une distance prédéterminée.

7. Dispositif d'aide à la manœuvre (10) selon l'une quelconque des revendications 1 à 6, **caractérisé en ce que** les moyens d'éclairage (14, 24) sont réalisés par un éclairage de dispositif d'aide à la manœuvre qui est aménagé pour être commandé par le dispositif de commande (22) séparément d'un éclairage standard du véhicule.

8. Procédé destiné à l'exécution d'une aide à la manœuvre pour un véhicule, en particulier un véhicule utilitaire, de préférence à l'exécution avec un dispositif d'aide à la manœuvre selon l'une quelconque des revendications 1 à 7, dans lequel des moyens d'éclairage (14, 24) aménagés pour éclairer au moins un sol sous le véhicule et/ou une carrosserie de véhicule sont commandés pour les activer et/ou les désactiver, les moyens d'éclairage (14, 24) étant commandés au moins en fonction d'une vitesse de véhicule, **caractérisé en ce que** les moyens d'éclairage (14, 24) sont activés si le véhicule présente une vitesse de véhicule relativement faible pendant une certaine période de temps.

9. Procédé selon la revendication 8, **caractérisé en ce que** les moyens d'éclairage (14, 24) sont commandés en outre au moins en fonction d'un engagement d'une marche arrière du véhicule et/ou d'un allumage des feux de croisement du véhicule et/ou d'un angle de braquage du volant et/ou d'une accélération du véhicule et/ou d'une distance du véhicule par rapport à au moins une limite de chaussée ou à un obstacle sur la chaussée.

10. Procédé selon la revendication 8 ou 9, **caractérisé en ce que** les moyens d'éclairage (14, 24) sont commandés en vue de leur activation si la vitesse de véhicule soupasse une vitesse de véhicule prédéterminée et/ou l'accélération de véhicule soupasse une accélération de véhicule prédéterminée.

11. Procédé selon l'une quelconque des revendications 8 à 10, **caractérisé en ce que** les moyens d'éclairage (14, 24) sont commandés en vue de leur désactivation lorsque la vitesse de véhicule dépasse une vitesse de véhicule prédéterminée et/ou l'accélération de véhicule dépasse une accélération de véhicule prédéterminée.

12. Procédé selon l'une quelconque des revendications 8 à 11, **caractérisé en ce que** les moyens d'éclairage (14, 24) sont commandés en vue de leur activation lorsque la distance du véhicule par rapport à la limite de chaussée ou à l'obstacle sur la chaussée soupasse une distance prédéterminée.

13. Procédé selon l'une quelconque des revendications 8 à 12, **caractérisé en ce que** les moyens d'éclairage (14, 24) sont commandés en vue de leur désactivation lorsque la distance du véhicule par rapport à la limite de chaussée ou à l'obstacle de chaussée dépasse une distance prédéterminée.

14. Procédé selon l'une quelconque des revendications 8 à 13, **caractérisé en ce que** les moyens d'éclairage (14, 24) réalisés par un éclairage d'aide à la manœuvre sont commandés séparément d'un éclairage standard du véhicule.

15. Véhicule, en particulier véhicule utilitaire, comprenant un dispositif d'aide à la manœuvre selon l'une quelconque des revendications 1 à 7 qui est adapté en particulier à l'exécution du procédé selon l'une quelconque des revendications 8 à 14.
